Europäisches Patentamt

European Patent Office

Office européen des brevets

(11) Publication number: **0 291 326**
**A1**

# EUROPEAN PATENT APPLICATION

(21) Application number: 88304352.3

(22) Date of filing: 13.05.88

(51) Int. Cl.⁴: **A 47 G 19/22**
A 47 J 41/00

(30) Priority: 15.05.87 GB 8711469

(43) Date of publication of application:
17.11.88 Bulletin 88/46

(84) Designated Contracting States: BE DE FR LU NL

(71) Applicant: MONO CONTAINERS LIMITED
41/42 Kew Bridge Road
Brentford Middlesex TW8 ODY (GB)

(72) Inventor: Kelly, Ronald
22 Meadow View
Marlow Bottom Buckinghamshire (GB)

Phillips, Raymond Gerald
Southview 37 York Road
Camberley Surrey (GB)

(74) Representative: Rees, David Christopher et al
Kilburn & Strode 30 John Street
London WC1N 2DD (GB)

(54) Insulated cups.

(57) An insulated cup (11) comprising a plastics container (12) and a sleeve (13). The sleeve (13) is formed from a flat strip of card (13a) which is wrapped around the container (12) and glued in position around the rim (14). The strip has notches (15) to allow the sleeve to adopt a position in which it can be stacked. The space (16) between the sleeve (13) and the container (12) acts as an insulation.

FIG.1.

FIG.2.

FIG.3.

EP 0 291 326 A1

## Description

### INSULATED CUPS

The present invention relates to insulated cups, which in the context of this specification include empty cups for receiving beverages and also containers which hold ingredients to which a liquid, generally water, is to be added. These cups would normally be considered to be disposable.

Disposable cups are generally made from a plastics material or from paper which may have been rendered water-proof. However, if they are to be used with hot beverages, they can be too hot to hold comfortably. Solutions to this drawback include making the cups from an insulating material, such as a foamed plastics material, or making the cups double-walled with an insulating space between the inner and outer walls. However, these cups are are more expensive to produce.

It is an object of the present invention to provide an insulated cup which is simpler and less expensive to produce than known insulated cups.

According to the invention, there is provided an insulated cup comprising a plastics container and a separate sleeve formed from a flat strip which is attached to the container to define a portion of the cup as a whole which is insulated. Since the sleeve begins as a flat strip, it can be printed upon cheaply and easily prior to its being attached to the container. This is a significant advantage over conventional cup designs which are difficult and expensive to print on.

The sleeve may be in the form of a collar attached to the upper region of the container and may be made of paper, paperboard, cardboard, plastics or a foamed plastics material. In such a case the sleeve is formed by wrapping the flat strip around the container, in which case the two ends would meet at a seam which can be welded or glued. The strip can be arcuate, or generally straight in which case it may have slits or notches to allow the wrapped strip to adopt an inclined orientation for stacking.

Preferably, the sleeve is spaced from the container to provide an insulation gap. This may be achieved by a rib or ribs extending out from the container, or by an internal rib on the sleeve. The sleeve may be glued or welded to the container. Alternatively, the sleeve may have an outwardly extending flange and the cup may have a lip which is curled over, in which case the flange of the sleeve can be located within the lip.

In an alternative embodiment, the sleeve may be a foamed plastics material which is not spaced from the container but is firmly attached to it.

In another embodiment, the container is formed with a series of ribs and channels, and the sleeve is attached to the container where contact is made with the ribs. The ribs may be generally horizontal or vertical and may widen throughout their length. The sleeve may be a thin film and may be stretched or shrunk onto the container. The sleeve may cover substantially the entire outer surface of the container. In all these cases, the sleeve preferably covers the channels to define insulating air gaps.

The sleeve may be plain or may include printed material.

The invention may be carried into practice in various ways and some embodiments will now be described by way of example with reference to the accompanying drawings, in which :-

Figure 1 shows a strip for use as a sleeve in accordance with the present invention;

Figure 2 shows the strip of Figure 1 when wrapped;

Figure 3 shows the strip of Figure 2 in position on a container;

Figures 4, 5 and 6 are views similar to Figures 1, 2 and 3 showing an alternative embodiment;

Figures 7, 8 and 9 are partial vertical sections of further embodiments;

Figure 10 is a vertical section of a further embodiment;

Figure 11 is a vertical section of a further embodiment; and

Figure 12 is a section on the line AA in Figure 11.

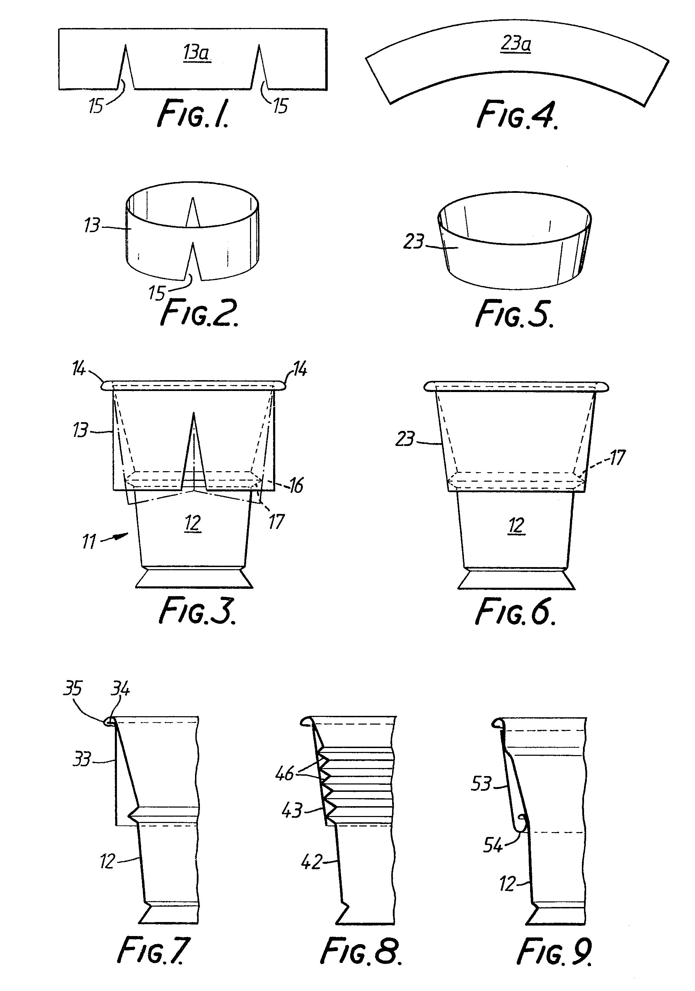

Referring firstly to Figures 1 to 3, a cup 11 comprises a plastics container 12 and a sleeve 13. The sleeve 13 is formed from a flat strip of card 13a which is wrapped around the container 12 and glued in position around the rim 14. The strip 13a has a series (in this case, two) notches 15 which allow the sleeve 13 to adopt the position shown in the broken lines in Figure 3 for stacking.

A space 16 is formed between the sleeve 13 and the container 12 which acts as an insulation. The container has a rib 17 which helps to maintain the space 16 even when the sleeve 13 is gripped.

Figures 4, 5 and 6 show another embodiment in which the strip 23a is arcuate and has no notches. The sleeve 23 formed is therefore part-conical and is located in the same way as the sleeve 13. However, the sleeve 23 also contacts the rib 17 and can be glued to it if desired. Again, a space 16 is formed between the sleeve 23 and the container 12.

Figure 7 shows a third embodiment in which the sleeve 33 has a flange 34 (or flared portion) at the top which is located within the curled-over rim 35 at the top of the container 12.

Figure 8 shows a fourth embodiment in which the container 42 has a series of horizontal ribs 46. The sleeve 43 has a multi-point contact which enables the sleeve 43 to be made from a thinner material.

Figure 9 shows a fifth embodiment in which the sleeve 53 has a curled-under portion 54 at the bottom. This serves to space the sleeve 53 from the container 12.

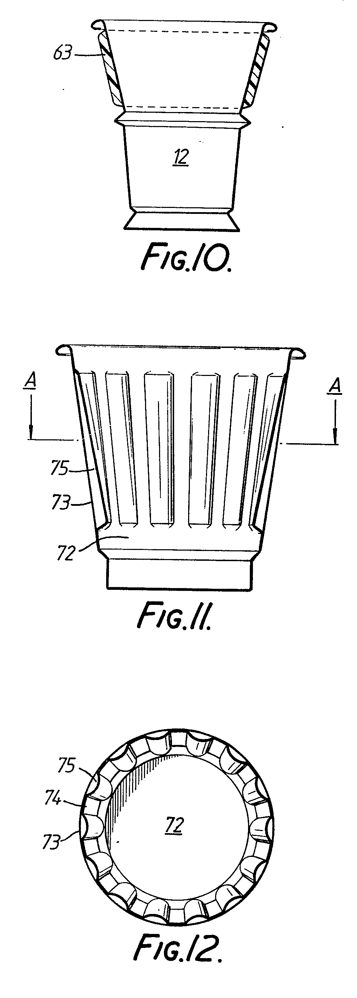

Figure 10 shows a sixth embodiment in which a sleeve 63 of a foamed plastics material is attached to the upper part of the container 12.

Figures 11 and 12 show a seventh embodiment in which the container 72 has a series of vertical ribs 74 and channels 75. The sleeve 73 comprises a plastics film 73 which stretches over the entire surface of the container 72. Thus, the channels 75 trap air and act as insulators.

In this case, the film may be printed upon while flat, then formed into a tube. The tube is then placed over the container 72 and shrink-fitted in position.

## Claims

1. An insulated cup (11) comprising a plastics container (12) characterised by a separate sleeve (13) formed from a flat strip (13a) which is attached to the container (12) to define a portion of the cup (11) as a whole which is insulated.

2. A cup as claimed in Claim 1 characterised in that the sleeve (13) is in the form of a collar attached to the upper region of the container, the collar being made from paper, paper board, cardboard, plastics or a foam plastics material.

3. A cup as claimed in Claim 1 or Claim 2 characterised in that the strip is arcuate (23a) or generally straight (13a) with slits or notches (15).

4. A cup as claimed in any preceding claim characterised in that the sleeve (13) is spaced from the container (12) to provide an insulation gap (16), optionally achieved by a rib or ribs (46) extending from the container or by an internal rib or ribs on the sleeve (54).

5. A cup as claimed in any preceding claim characterised in that the sleeve (13) is welded or glued to the container (12).

6. A cup as claimed in any of Claims 1 to 3 characterised in that the sleeve (33) has an outwardly extending flange (34) and the cup has a lip which is curled over (35), the flange (34) being located within the curled lip (35).

7. A cup as claimed in Claim 1 characterised in that the sleeve (63) is made from a foamed plastics material which is not spaced from the container but is firmly attached to it.

8. A cup as claimed in any of Claims 1 to 4 in which the container is formed with a series of ribs and channels (74,75) and the sleeve (73) is attached to the container where contact is made with the ribs (74).

9. A cup as claimed in Claim 8 characterised in that the sleeve is a thin film which is stretched or shrunk onto the container and optionally covers the entire outer surface of the container.

10. A cup as claimed in any preceding claim in which the sleeve includes printed material.

0291326

**FIG.1.**

**FIG.4.**

**FIG.2.**

**FIG.5.**

**FIG.3.**

**FIG.6.**

**FIG.7**

**FIG.8.**

**FIG.9.**

0291326

63

*12*

**FIG.IO.**

A                                    A

75

73

72

**FIG.II.**

75

74

73

*72*

**FIG.12.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 068 713 (MARS LTD) <br> * Page 1, lines 49-55,74-78 * | 1-3,5,7,10 | A 47 G 19/22 <br> A 47 J 41/00 |
| A | * Page 1, lines 15-25; page 2, lines 25-28 * | 8,9 | |
| X | FR-A-1 426 739 (BILLINGSFORS-LANGED AB) <br> * Summary; figure 1 * | 1,2 | |
| A | GB-A-1 261 533 (MONO CONTAINERS LTD) <br> * Figure 1; page 1, lines 72-77 * | 1,4,6 | |

TECHNICAL FIELDS SEARCHED (Int. Cl.4)

A 47 G
A 47 J

The present search report has been drawn up for all claims

| Place of search | Date of completion of the search | Examiner |
|---|---|---|
| THE HAGUE | 23-08-1988 | BEUGELING G.L.H. |